# EUROPEAN PATENT APPLICATION

(11) **EP 2 597 548 A2**
(43) Date of publication of application: **29.05.2013**
(21) Application number: 12193282.6
(22) Date of filing: 19.11.2012
(51) Int. Cl.: G06F 3/038, G06F 3/0354, G06F 3/0481, G06F 3/0488

(54) **Dynamic scaling of touch sensor**

(30) Priority: 23.11.2011 US 201113304093
(71) Applicant: Microsoft Corporation, Redmond, WA 98052 (US)
(72) Inventor: Miller, Michael, Redmond, Washington 98052 (US); Schwesinger, Mark, Redmond, Washington 98052 (US); Gentzkow, Hauke, Redmond, WA Washington 98052 (US); Ashley, Bryon, Redmond, WA Washington 98052 (US); Harris, Jonathan, Redmond, WA Washington 98052 (US); Hanks, Richard, Redmond, WA Washington 98052 (US); Grant, Anthony, Redmond, WA Washington 98052 (US); Sarin, Raman, Redmon, WA Washington 98052 (US)
(74) Representative: Fischer, Michael

(57) **Abstract**

Embodiments are disclosed that relate to dynamically scaling a mapping between a touch sensor and a display screen. One disclosed embodiment provides a method (200) including setting (202) a first user interface mapping that maps an area of the touch sensor to a first area of the display screen, receiving (208) a user input from the user input device that changes a user interaction context of the user interface, and in response to the user input, setting (210) a second user interface mapping that maps the area of the touch sensor to a second area of the display screen. The method further comprises providing (218) to the display device an output of a user interface image representing the user input at a location based on the second user interface mapping.

## Description

### BACKGROUND

Many computing devices utilize touch sensors as user input devices. Inputs made via a touch sensor may be translated to actions on a graphical user interface in various ways. For example, in some instances, a touch sensor may be used purely for tracking changes in finger location on the surface, for example, to control movement of a cursor. Thus, the specific location of the touch on the touch sensor does not affect the specific location of the cursor on the graphical user interface. Such interpretation of touch inputs may be used, for example, with a touch pad for a laptop computer, where the touch sensor is not located directly over a display device.

In other instances, locations on a touch sensor may be mapped to corresponding locations on a graphical user interface. In such instances, a touch made to a touch sensor may affect a user interface element at a specific display screen location mapped to that touch sensor location. Such direct mapping may be used, for example, where a transparent touch sensor is located over a display.

### SUMMARY

Various embodiments are disclosed that relate to dynamically scaling a mapping between a touch sensor and a display screen. For example, one disclosed embodiment provides a method comprising setting a first user interface mapping that maps an area of the touch sensor to a first area of the display screen, receiving a user input from the user input device that changes a user interaction context of the user interface, and in response to the user input, setting a second user interface mapping that maps the area of the touch sensor to a second area of the display screen. The method further comprises providing to the display device an output of a user interface image representing the user input at a location based on the second user interface mapping.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Figure 1 shows an example embodiment of a use environment for a touch-sensitive input device.

Figure 2 shows a flow diagram depicting an embodiment of a method of dynamically scaling a mapping of a touch sensor to a display screen.

Figure 3 shows an embodiment of a touch-sensitive user input device comprising a touch sensor, and also shows an example first mapping of the touch sensor to a display screen.

Figure 4 shows an example second mapping of the embodiment of Figure 5 based upon a change in user interface context.

Figure 5 shows another example mapping illustrating sub-regions of the touch sensor mapped to corresponding sub-regions of a user interface at different aspect ratios.

Figure 6 shows a block diagram of an example embodiment of a dedicated remote control user input device.

Figure 7 shows an example of a user interaction with the embodiment of Figure 6.

Figure 8 shows an example of another user interaction with the embodiment of Figure 6.

Figure 9 shows a flow diagram depicting an embodiment of a method of operating a user input device.

Figure 10 shows a block diagram of an embodiment of a computing device.

### DETAILED DESCRIPTION

As mentioned above, a touch sensor may be mapped to a graphical user interface such that specific locations on the touch sensor correspond to specific locations on the graphical user interface. Where such a touch sensor is located directly over a graphical user interface, as with a smart phone or notepad computer, selecting an appropriate location to make a desired touch input simply involves touching the surface directly over the desired user interface element.

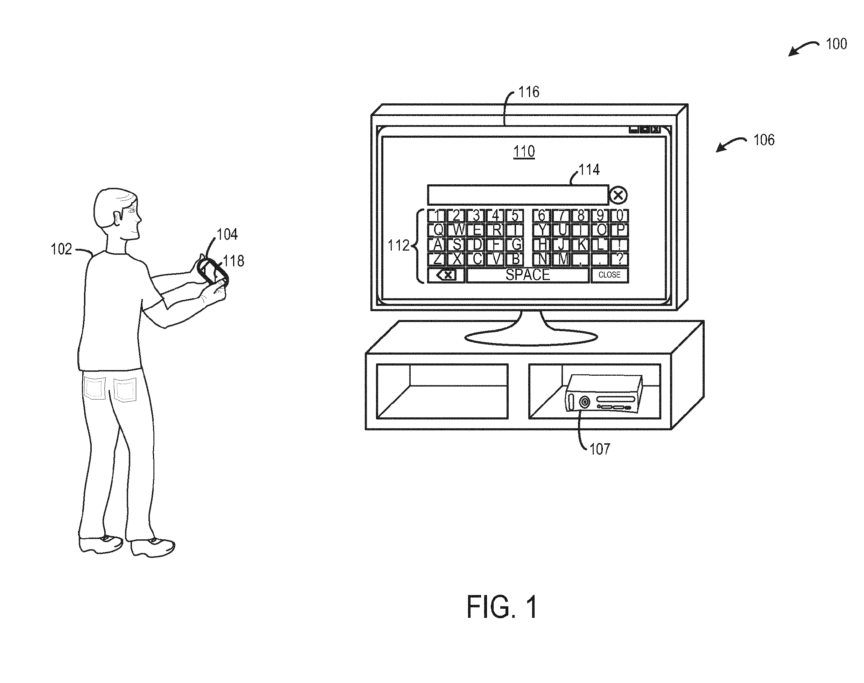

However, finding a correct location on a touch sensor to make a touch input may be more difficult in situations where the touch sensor is not located directly over a graphical user interface. Figure 1 shows an example embodiment of a use environment 100, in which a user 102 is utilizing a touch-sensitive device 104 to remotely interact with a user interface displayed on a separate display system, such as a display device 106 (e.g. a television or monitor) connected to a media presentation device 107, such as a video game system, personal media computer, set-top box, or other suitable computing device. Examples of touch-sensitive devices that may be used as a remote control device in use environment 100 include, but are not limited to, smart phones, portable media players, notepad computers, laptop computers, and dedicated remote control devices.

In such a use environment, it may be desirable not to display an image of the user interface on the remote control device during use to avoid the potentially disruptive user experience of having to look back and forth between the display screen and the remote control device. However, a user may experience some difficulties in quickly selecting user interface elements when looking at a relatively distant display screen when the touch sensor is not in the user's direct field of view. To help overcome such difficulties, current touch-sensitive devices may allow a user to zoom in on a portion of the user interface for more precision. However, this may obscure other areas of the user interface, and also may increase a complexity of interacting with the user interface.

Therefore, embodiments are disclosed herein that relate to facilitating the use of a touch-sensitive user input device by dynamically scaling a mapping of the touch sensor to an active portion of a user interface. Referring again to Figure 1, the user 102 is shown interacting with a text entry user interface 110 comprising active areas (e.g. areas with user-selectable controls) in the form of a layout of letter entry controls 112 and a text display and editing field 114. The active areas of the user interface 110 occupy only a portion of the display screen 116 of the display device 106. Therefore, if the entire touch sensor 118 of the touch-sensitive device 104 were mapped to the entire display screen 116, only a portion of the touch sensor 118 would be useable for interacting with active areas of the user interface 110, and other portions of the touch sensor 118 would not be utilized.

Thus, according to the disclosed embodiments, when the user 102 navigates to the text entry user interface 110, the mapping of the touch sensor 118 to the display screen 116 may be dynamically adjusted such that a larger relative area of the touch sensor 118 is mapped to the areas of the display device 106 corresponding to active areas of the user interface 110. This may allow a user to have more precise control of user inputs.

In some embodiments, different areas of the touch sensor may be dynamically scaled to different degrees relative to a user interface. This may allow, for example, more-often used user interface controls to be allotted relatively more area on the touch sensor than less-often used controls of a similar size on the user interface. This may allow a user to select the more-often used controls with less precise touch inputs than the less-often used controls. Likewise, user interface controls with greater consequences for an incorrect selection may be allotted relatively less area on the touch-sensor than a control of similar size but with lesser consequences for an incorrect selection. This may require a user to select higher-consequence actions more deliberately. As a more specific example, a mapping of a touch sensor may be scaled differently for a "pause" control and a "stop" control on a media playback user interface such that the "pause" control is easier to select, as accidentally selecting a "pause" control may be less consequential than accidentally selecting a "stop" control.

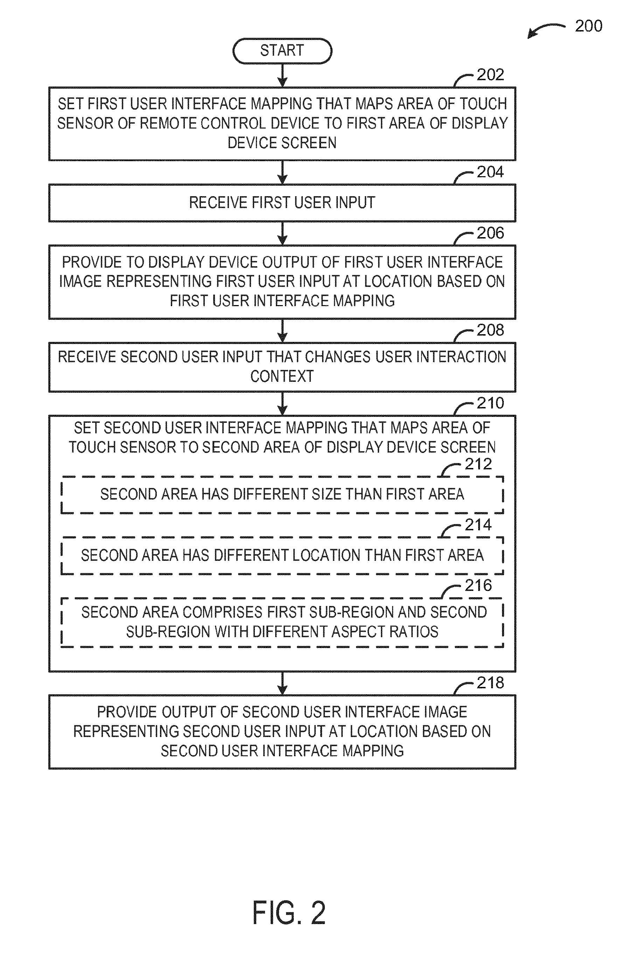

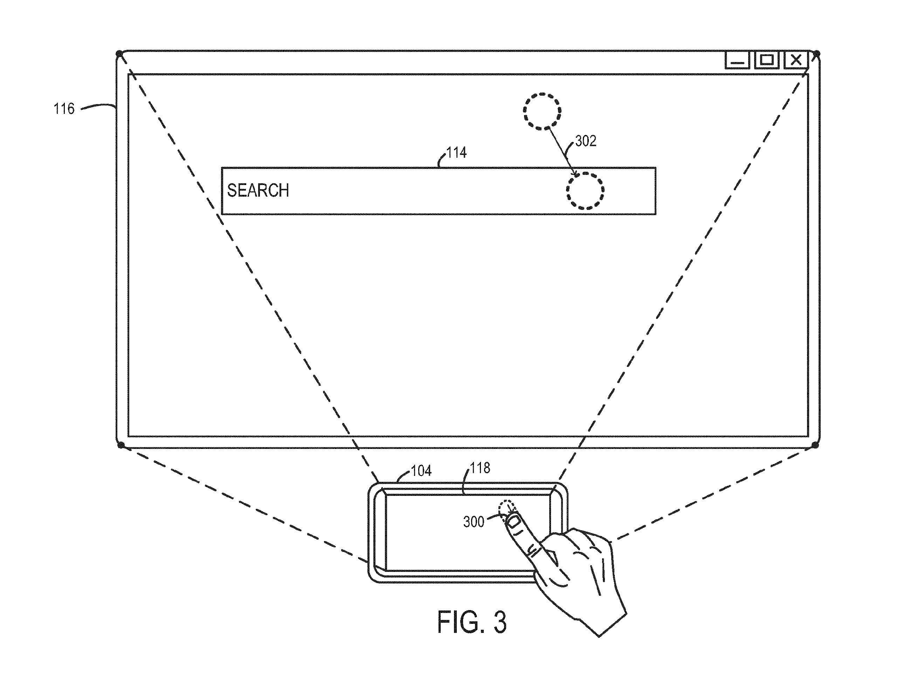

Figure 2 shows a flow diagram depicting an embodiment of a method 200 of dynamically scaling a mapping of a touch sensor to a display screen of a display device. It will be understood that method 200 may be performed by any suitable device, including but not limited to the remote control device, media presentation device of Fig. 1. Method 200 comprises, at 202, setting a first user interface mapping that maps an area of a touch sensor of a remote control device to a first area of a display device screen. Method 200 further comprises, at 204, receiving a first user input from a touch-sensitive user input device, and at 206, providing to a display device an output of a first user interface image representing the first user input at a location based upon the first user interface mapping. Figure 3 shows examples embodiments of a touch input and user interface image. In the example of Figure 3, an entire area of the touch sensor 118 is mapped to the entire area of the display screen 116 at a single aspect ratio. In this figure, it can be seen that movement of a touch input 300 between selected locations on the touch sensor 118 results in the movement of a cursor 302 at proportional locations on a user interface displayed on the display screen 116.

Continuing with Figure 2, method 200 next comprises, at 208, receiving a second touch input that changes a context of a user interaction with the user interface. "Change in context" and the like as used herein may refer to any change in an aspect of the interactivity of the user interface, such as changes in the selection of controls displayed, changes in the locations of controls, etc. In Figure 2, an example touch input is depicted as selection of the search bar shown in Figure 3. In response to the second touch input, method 200 comprises, at 210, setting a second user interface mapping that maps the area of the touch sensor to a second area of the display screen that is different than the first area of the display screen. The second area of the display screen may have a different size than the first area, as indicated at 212, a different location, as indicated at 214, and/or any other suitable difference compared to the first area. Further, the second area of the display screen also may have a different aspect ratio than the first mapping. Method 200 further comprises, at 218, providing an output of a second user interface image representing the second user input at a location based upon the second user interface mapping. The second user interface image may comprise any other suitable information, such as a plurality of user interface controls configured to be displayed within the second area of the display screen.

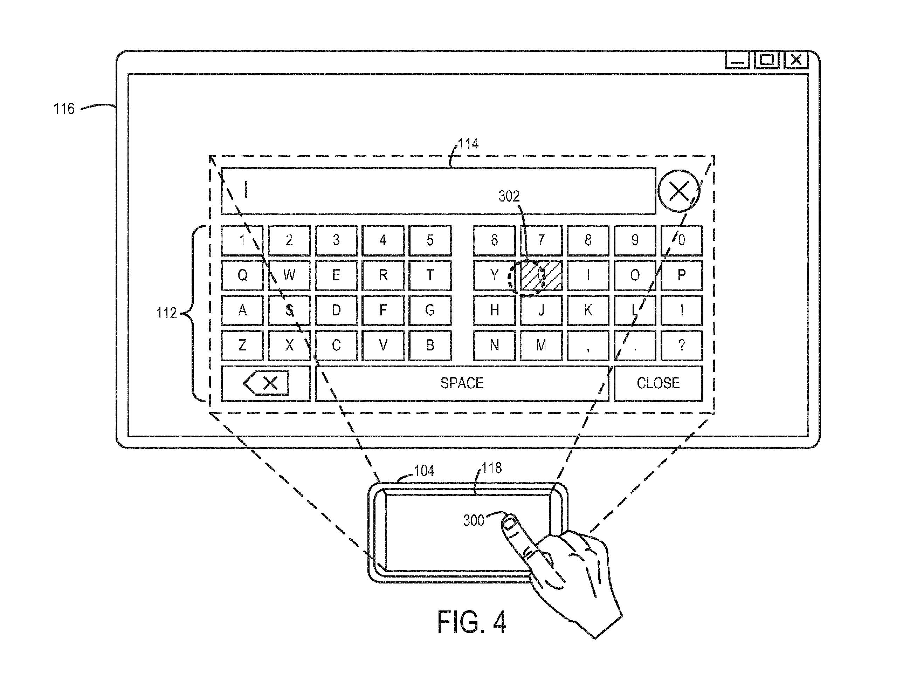

Figure 4 shows an example embodiment of a second mapping of the area of the touch sensor to the display screen. Instead of mapping the entire sensor area to the entire display screen at a single aspect ratio, Figure 4 shows the entire area of the touch sensor mapped in a single aspect ratio to that area of the display screen occupied by the active letter entry controls 112 and the text display and editing field 114, to the exclusion of other areas of the display screen not occupied by these elements. Thus, in the depicted embodiment, the second area of the display screen is smaller than the first area of the display screen. Such a mapping may allow room for the display of other elements, such as search results, to be included on the display screen, while facilitating the entry of touch inputs by providing more touch sensor area with which to make such inputs. While the change in touch sensor mapping is illustrated herein in the context of a text entry user interface, it will be understood that dynamic touch sensor mapping changes may be used in any other suitable user interface context in which additional touch input precision may be desired.

As mentioned above, in some embodiments, different areas of the touch sensor may be dynamically scaled to different degrees relative to a user interface so that different user interface controls may be more easily or less easily located. This may allow, for example, more-often used user interface controls to be allotted relatively more area on the touch sensor than less-often used controls of a similar size on the user interface.

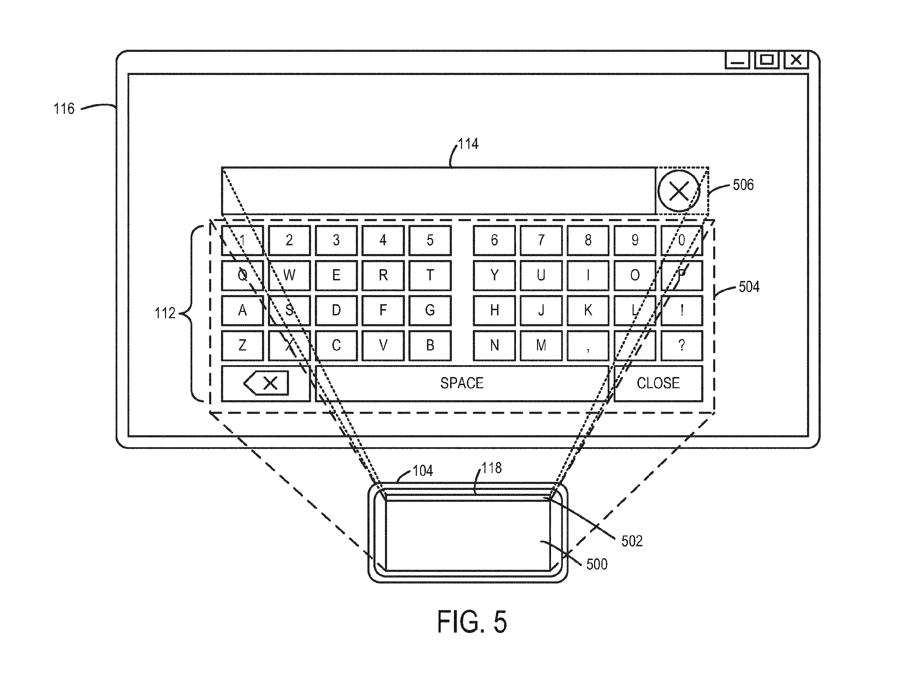

Figure 5 shows an embodiment of a touch sensor mapping in which a first sub-region of the display screen and a second sub-region of the display screen are mapped to the touch sensor at different aspect ratios based upon likely usage patterns. More specifically, as users may be likely to interact more often with letter entry controls on a text entry user interface than the text display and editing field, the mapping of the touch sensor to the user interface of Figure 5 is configured to facilitate the selection of letter entry controls, and to encourage a more deliberate user input to select the text display and editing field. The first sub-region 500 of the display screen is depicted as including the letter entry controls 112, and the second sub-region as including the text display and editing field 114. As shown, the first sub-region 500 is mapped to a sub-region 504 of the touch sensor 118 that occupies a greater relative area of the touch sensor than the relative amount of display screen area occupied by the letter entry controls 112. Likewise, the second sub-region 502 of the display screen is mapped to a sub-region 506 of the touch sensor 118 that occupies a lesser relative area of the touch sensor 504 than the relative amount of display screen area occupied by the text display and editing field 114. In this manner, the touch sensor mapping shown in Figure 5 may facilitate the selection of letter entry controls 112 while helping to avoid inadvertent selection of the text display and editing field 114.

In some embodiments, the user interface mapping may be configured to exhibit some hysteresis when a touch input moves between sub-regions. For example, after a user's finger enters a touch sensor region corresponding to a user interface control by crossing a boundary from a first sub-region into a second sub-region of the touch sensor/user interface mapping, the user interface element in the second sub-region that is currently in focus due to the touch input may not be changed even after the user crosses the boundary back toward the first sub-region until the cursor passes a threshold distance beyond the boundary. This may involve more deliberate user inputs to move between user interface controls, and therefore may help to avoid inadvertent inputs. In other embodiments, a single boundary location may be used to recognize a switch between touch sensor sub-regions in either direction of movement. It will be understood that a degree of hysteresis between sub-regions may vary similarly to the mapping of sub-regions. For example, a greater amount of hysteresis may be applied when moving into regions having a greater consequence of inadvertent selection compared to regions having a lesser consequence.

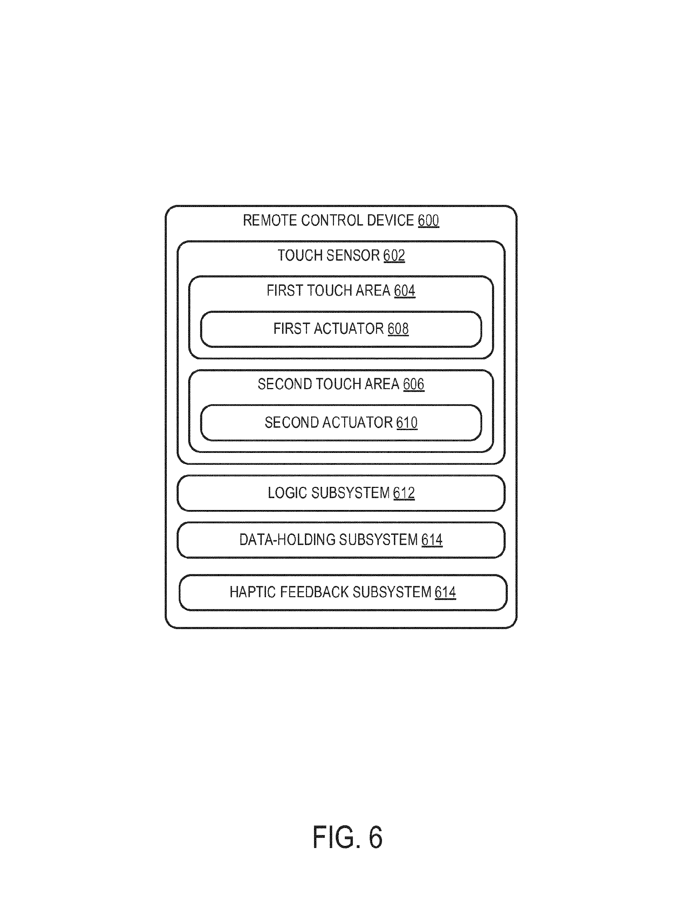

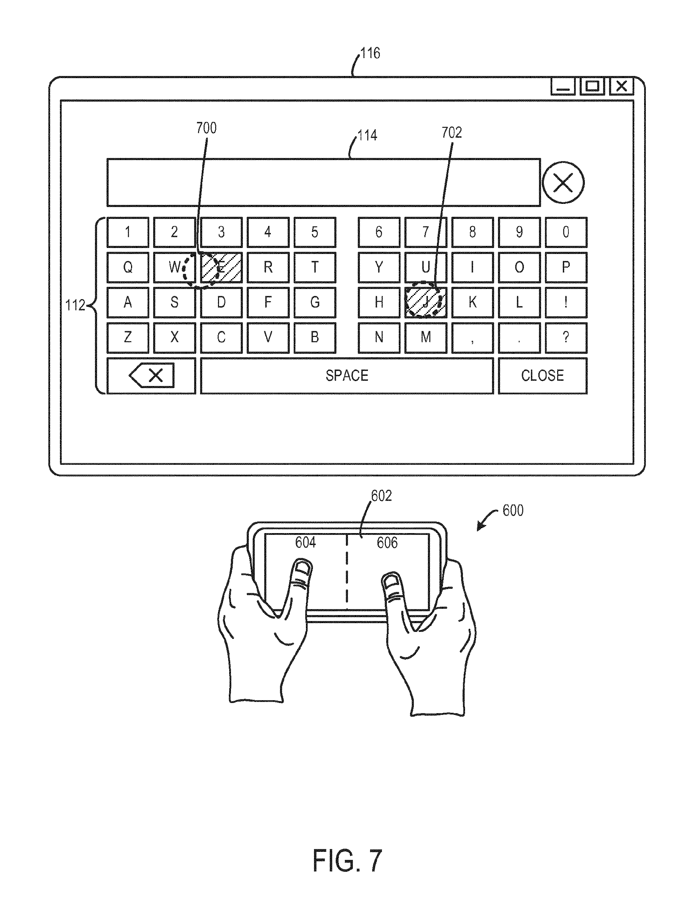

As mentioned above, dynamic scaling of a touch sensor to a user interface may be used with any suitable touch-sensitive input device, including but not limited to smart phones, portable media players, notepad computers, laptop computers, and dedicated remote control devices. Figure 6 shows a block diagram of an embodiment of a dedicated touch-sensitive remote control device 600 configured to facilitate text entry compared to conventional touch-sensitive devices, and Figure 7 shows an example use environment for the remote control device 600. The remote control device 600 comprises a touch sensor 602 having at least a first touch area 604 and a second touch area 606. Further, a first actuator 608 is associated with the first touch area 604, and a second actuator 610 is associated with the second touch area 606. The first actuator 608 is configured to be actuated via a press in the first touch area 604, and the second actuator 610 is configured to be actuated via a press in the second touch area 606. A user may select letters for entry by moving a cursor over a desired letter by touch input, and then pressing the touch area to trigger the corresponding actuator. Figure 7 shows a first cursor 700 for the first touch area 604, and a second cursor 702 for the second touch area 606, each cursor indicating a location of a touch input as mapped to the display screen. In other embodiments, a dedicated remote control device may include a single actuator, or no actuator that triggered via pressure on the touch-sensitive surface. In such embodiments, various heuristics may be used to simulate a click-type user intention. It further will be understood that the two touch areas also may comprise a single physical touch surface without delineation between the touch areas, and further be mapped in various applications such that the two touch areas are considered a single touch area.

The use of two touch areas and two actuators allows a user to independently manipulate separate cursors for each hand, as depicted in Figure 7, and thereby may help to increase the efficiency of text entry. Further, in some embodiments, the remote control device 600 may lack a display screen or other features on the touch sensor. This may help to prevent diverting the user's attention from the display screen of the display device being controlled, and therefore help to focus the user's attention on the display device.

The remote control device 600 further comprises a logic subsystem 612, and a data-holding subsystem 614 comprising instructions stored thereon that are executable by the logic subsystem 612 to perform various tasks, such as receiving user inputs and communicating the user inputs to a media presentation system, display system, etc. Examples of these components are discussed in more detail below.

The use of separate first and second touch areas each having an independently operable actuator may allow a user to enter text quickly with two thumbs or other digits, without lifting the digits off of the surface between letter entries. Further, as remote control device 600 may lack a display screen, a user is not distracted by looking down at the remote control device 600 during use, but rather may place full attention on the display device. These features may offer various advantages over other methods of entering text in a use environment in which the touch sensor may be located a distance from a display screen and out of direct view when a user is looking at the display screen. For example, some remote control devices utilize a directional pad (e.g. a control with up, down, left and right commands) to move a cursor on a displayed alphanumeric keyboard layout. However, such text entry may be slow and tedious. Other remote control devices may comprise a hard keyboard. A hard keyboard may improve the efficiency of text entry compared to the use of a directional pad, but also may increase the size, complexity, and cost of the input device. The inclusion of a hard keyboard also may force a user to split attention between looking down at the device and up at the display screen. In contrast, in the embodiment of Figure 6, the inclusion of two actuators, rather than an actuator for each button of a hard keyboard, may help to reduce the cost of the device. It will be understood that the touch sensor 602 of the remote control device 600 may be dynamically mapped to the display screen, as described above, which may further facilitate text selection.

The first actuator 608 and second actuator 610 may utilize any suitable actuation mechanism. In some embodiments, the actuators 608, 610 may comprise physical buttons to provide tactile feedback when text is selected. In other embodiments, the actuators 608, 610 may utilize pressure sensors or other actuation mechanisms. Where pressure sensors or the like are utilized, the remote control device 600 may include a haptic feedback system 616, such as a vibration mechanism, to provide user feedback regarding registered inputs.

In the embodiment of Figure 7, the cursors 700, 702 indicate finger positions on the touch sensor 602, and other highlighting is used as a focus indicator that indicates which user interface controls currently have focus. In the specific example of Figure 7, the left cursor 700 is positioned to provide focus to the letter "e," and the right cursor 702 is positioned to provide focus to the letter "j." In other embodiments, touch position and focus for a touch input may be indicated via a single user interface element.

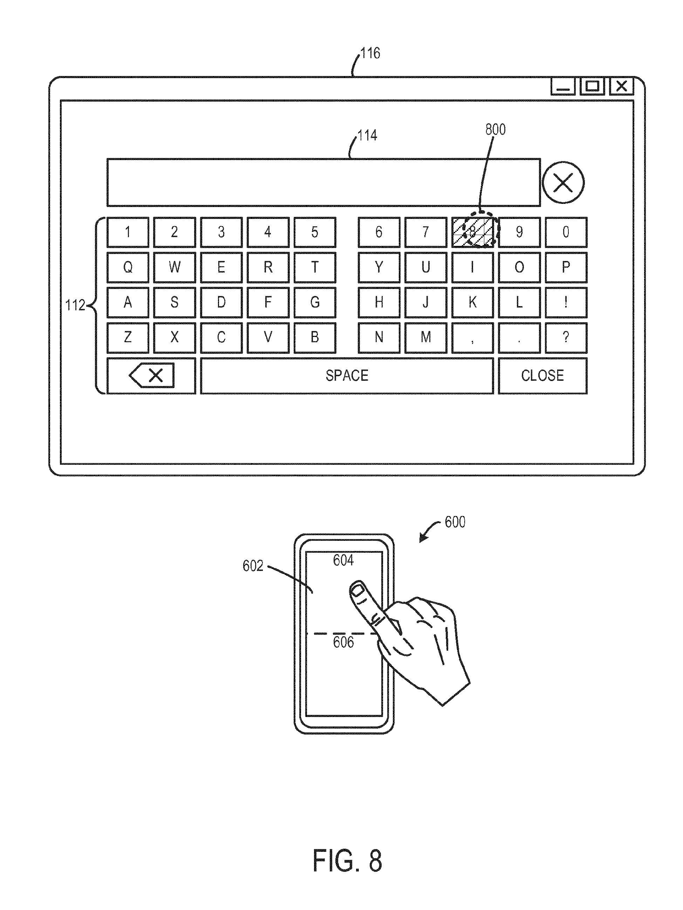

It will be understood that the number of displayed cursors, as well as the mapping of the touch sensor 602 to the display screen, may depend upon a number of fingers touching the touch sensor 602. For example, as depicted in Figure 7, two cursors 700, 702 may be displayed when two fingers are touching the touch sensor 602. In this instance, the first touch area 604 and second touch area 606 of the touch sensor 602 may be mapped to corresponding first and second areas of the display screen. Likewise, where a single finger is touching the touch sensor 602, for example, when the remote control device 600 is held in a portrait orientation (as shown Figure 8) a single cursor 800 may be displayed on the display screen. In this instance, one touch area (e.g. first touch area 604) of the touch sensor 602 may be mapped to the entire active area of the display screen.

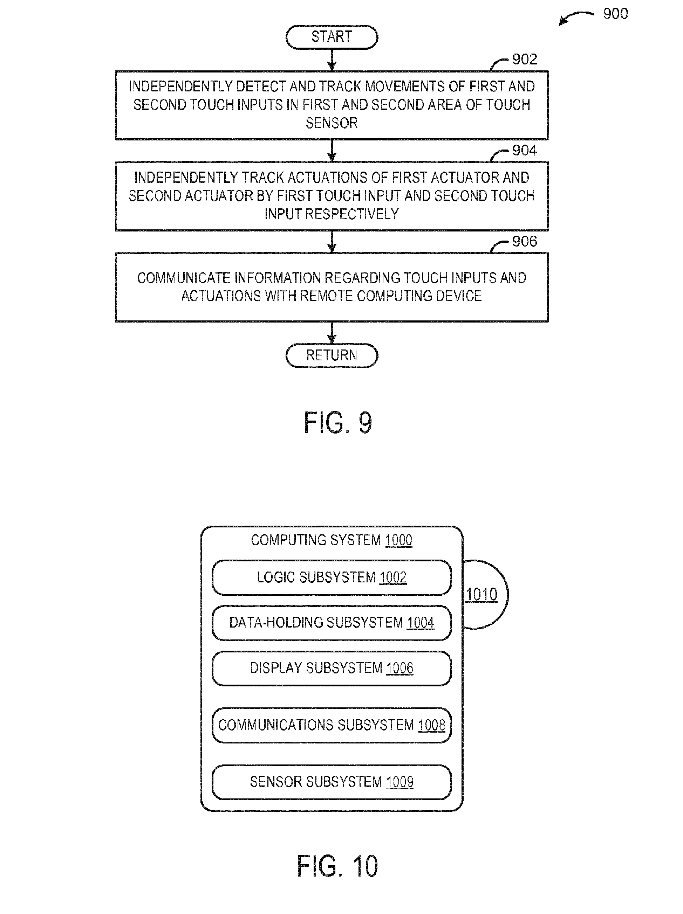

Figure 9 illustrates an embodiment of a method 900 of operating a remote control device, such as remote control device 600. Method 900 comprises, at 902, independently detecting and tracking movements of first and second touch inputs occurring respectively in first and second areas of a touch sensor, such as first touch area 604 and second touch area 606 of touch sensor 602. Method 900 next comprises, at 904, independently tracking actuations of a first actuator corresponding to the first touch surface and a second actuation corresponding to the second touch surface. Method 900 also comprises, at 906, communicating information with the detected touch inputs and actuations with a remote computing device. The remote computing device may then perform actions corresponding to user interface elements based upon the locations of the touch inputs when the actuations were performed by the user.

As mentioned above, the display systems and touch-sensitive input devices described above, including but not limited to touch-sensitive device 104, display device 106, media presentation device 107, and remote control device 600, each may take the form of a computing system. Figure 10 schematically shows a nonlimiting example computing system 1000 that may perform one or more of the above described methods and processes. The computing system 1000 is shown in simplified form. It is to be understood that virtually any computer architecture may be used without departing from the scope of this disclosure. In different embodiments, the computing system 1000 may take the form of a mainframe computer, server computer, desktop computer, laptop computer, tablet computer, home entertainment computer, network computing device, mobile computing device, mobile communication device, gaming device, etc.

The computing system 1000 includes a logic subsystem 1002 and a data-holding subsystem 1004. The computing system 1000 may optionally include a display subsystem 1006, or may omit a display system (as described with reference to the remote control device of Figure 6). The computing system 1000 may further comprise a communication subsystem 1008 for communicating with other computing devices, and a sensor subsystem 1009 comprising a touch sensor configured to detect touch inputs. The computing system 1000 also may include other input and/or output devices not described herein.

The logic subsystem 1002 may include one or more physical devices configured to execute one or more instructions. For example, the logic subsystem 1002 may be configured to execute one or more instructions that are part of one or more applications, services, programs, routines, libraries, objects, components, data structures, or other logical constructs. Such instructions may be implemented to perform a task, implement a data type, transform the state of one or more devices, or otherwise arrive at a desired result.

The logic subsystem 1002 may include one or more processors that are configured to execute software instructions. Additionally or alternatively, the logic subsystem 1002 may include one or more hardware or firmware logic machines configured to execute hardware or firmware instructions. Processors of the logic subsystem 1002 may be single core or multicore, and the programs executed thereon may be configured for parallel or distributed processing. The logic subsystem 1002 may optionally include individual components that are distributed throughout two or more devices, which may be remotely located and/or configured for coordinated processing. One or more aspects of the logic subsystem 1002 may be virtualized and executed by remotely accessible networked computing devices configured in a cloud computing configuration.

The data-holding subsystem 1004 may include one or more physical, non-transitory, devices comprising computer readable media configured to store data and/or instructions executable by the logic subsystem to implement the herein described methods and processes. When such methods and processes are implemented, the state of data-holding subsystem 1004 may be transformed (e.g., to hold different data).

The data-holding subsystem 1004 may include removable media and/or built-in devices. The data-holding subsystem 1004 may include optical memory devices (e.g., CD, DVD, HD-DVD, Blu-Ray Disc, etc.), semiconductor memory devices (e.g., RAM, EPROM, EEPROM, etc.) and/or magnetic memory devices (e.g., hard disk drive, floppy disk drive, tape drive, MRAM, etc.), among others. The data-holding subsystem 1004 may include devices with one or more of the following characteristics: volatile, nonvolatile, dynamic, static, read/write, read-only, random access, sequential access, location addressable, file addressable, and content addressable. In some embodiments, logic subsystem 1002 and the data-holding subsystem 1004 may be integrated into one or more common devices, such as an application specific integrated circuit or a system on a chip.

Figure 10 also shows an aspect of the data-holding subsystem in the form of removable computer-readable storage media 1010, which may be used to store and/or transfer data and/or instructions executable to implement the herein described methods and processes. Removable computer-readable storage media 1010 may take the form of CDs, DVDs, HD-DVDs, Blu-Ray Discs, EEPROMs, and/or floppy disks, among others.

It is to be appreciated that data-holding subsystem 1004 includes one or more physical, non-transitory devices. In contrast, in some embodiments aspects of the instructions described herein may be propagated in a transitory fashion by a pure signal (e.g., an electromagnetic signal, an optical signal, etc.) that is not held by a physical device for at least a finite duration. Furthermore, data and/or other forms of information pertaining to the present disclosure may be propagated by a pure signal.

When included, display subsystem 1006 may be used to present a visual representation of data held by data-holding subsystem 1004. As the herein described methods and processes change the data held by the data-holding subsystem, and thus transform the state of the data-holding subsystem, the state of display subsystem 1006 may likewise be transformed to visually represent changes in the underlying data. Display subsystem 1006 may include one or more display devices utilizing virtually any type of technology. Such display devices may be combined with logic subsystem 1002 and/or data-holding subsystem 1004 in a shared enclosure, or such display devices may be peripheral display devices.

Communication subsystem 1008 may be configured to communicatively couple computing system 1000 with one or more other computing devices. Communication subsystem 1008 may include wired and/or wireless communication devices compatible with one or more different communication protocols. As nonlimiting examples, the communication subsystem may be configured for communication via a wireless telephone network, a wireless local area network, a wired local area network, a wireless wide area network, a wired wide area network, etc. In some embodiments, the communication subsystem may allow computing system 1000 to send and/or receive messages to and/or from other devices via a network such as the Internet.

It is to be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated may be performed in the sequence illustrated, in other sequences, in parallel, or in some cases omitted. Likewise, the order of the above-described processes may be changed.

The subject matter of the present disclosure includes all novel and nonobvious combinations and subcombinations of the various processes, systems and configurations, and other features, functions, acts, and/or properties disclosed herein, as well as any and all equivalents thereof.

## Claims

1. In a computing device configured to receive inputs from a user input device comprising a touch sensor and to output a user interface image to a display device separate from the touch sensor, a method (200) comprising:
setting (202) a first user interface mapping that maps an area of the touch sensor to a first area of the display screen of the display device;
receiving (208) a user input from the user input device that changes a user interaction context of the user interface;
in response to the user input, setting (210) a second user interface mapping that maps the area of the touch sensor to a second area of the display screen; and
providing (218) to the display device an output of a user interface image representing the user input at a location based on the second user interface mapping.

2. The method of claim 1, wherein the second area of the display screen is smaller than the first area of the display screen.

3. The method of claim 2, wherein the user interface image comprises a plurality of user interface controls configured to be displayed within the second area of the display screen.

4. The method of claim 3, wherein the plurality of user interface controls comprises a text entry keyboard.

5. The method of claim 1, wherein the second area of the display screen comprises a different location than the first area of the display screen.

6. The method of claim 1, wherein the second user interface mapping comprises a first sub-region of the display screen and a second sub-region of the display screen mapped to the touch sensor at different aspect ratios.

7. The method of claim 1, wherein the user interface image comprises text entry controls in the first sub-region and a text box in the second sub-region.

8. The method of claim 7, further comprising receiving touch input data corresponding to movement of a cursor over a boundary between the first sub-region and the second sub-region, and not changing a focus of the user input until the cursor passes a threshold distance beyond the boundary.

9. A computing device (1000), comprising:
a logic subsystem (1002);
a communication subsystem (1008); and
a data-holding subsystem (1004) comprising instructions stored thereon that are executable by the logic subsystem to:
set (202) a first user interface mapping that maps an area of a touch sensor of a remote control device to a first area of a display screen of a display device;
receive (204) a first user input;
in response to the first user input, provide (206) to the display device an output of a first user interface image representing the first user input at a location based on the first user interface mapping;
receive (208) a second user input from the user input device that changes a user interaction context;
in response to the user input, set (210) a second user interface mapping that maps the area of the touch sensor to a second area of the display screen that is smaller than the first area of the display screen; and
provide (218) to the display device an output of a second user interface image representing the second user input at a location based on the second user interface mapping.

10. The computing device of claim 9, wherein the second user interface image comprises a plurality of user interface controls configured to be displayed within the second area of the display screen.
